# EUROPEAN PATENT SPECIFICATION

(11) **EP 4 202 261 B1**
(45) Date of publication and mention of the grant of the patent: **27.11.2024**
(21) Application number: 22215656.4
(22) Date of filing: 21.12.2022
(51) Int. Cl.: B60K 6/48, F16H 48/22, F16H 57/037, H02K 7/116, B60K 6/20, F16H 3/089, B60K 6/52, F16H 48/08, F16H 3/08, F16H 57/02

(54) **IMPROVED HYBRID DRIVING FRONT AXLE FOR AN AGRICULTURAL VEHICLE**
VERBESSERTE HYBRID-FAHRVORDERACHSE FÜR EIN LANDWIRTSCHAFTLICHES FAHRZEUG
ESSIEU AVANT MOTEUR HYBRIDE AMÉLIORÉ POUR VÉHICULE AGRICOLE

(30) Priority: 21.12.2021 IT 202100032051
(43) Date of publication of application: 28.06.2023
(73) Proprietor: CNH Industrial Italia S.p.A., 10156 Torino (IT)
(72) Inventor: Forte, Michelantonio, 41122 Modena (IT); Borghi, Alberto, 42033 Carpineti (RE) (IT); Inversani, Alessio, 41030 Cavezzo (MO) (IT); Zanasi, Nicholas, 41013 Castelfranco Emilia (MO) (IT)
(74) Representative: CNH Industrial IP Department

(56) References cited:
- DE-U1- 202005 019 438
- US-B2- 11 072 229
- US-B2- 7 191 859

## Description

### TECHNICAL FIELD

The present invention relates to a driving axle for an agricultural vehicle, in particular a hybrid driving front axle for a tractor.

### BACKGROUND OF THE INVENTION

Reduction of automotive fuel consumption and emissions is an ongoing process that involves more and more vehicles, including agricultural and work vehicles, powered either entirely or in hybrid fashion by electric machines.

In general, hybrid/electrified vehicles differ from conventional internal combustion powered motor vehicles in that they are powered, at least in part, by one or more battery powered electric machines.

Such battery powered electric machines occupy a significant space and may be arranged, if present, far from the internal combustion engine.

However, the re-arrangement of the elements of the axle in the vehicle would mean to update globally the design of the vehicle thereby incurring in high costs.

Moreover, each agricultural vehicle configuration has different power size and therefore each configuration would need a specific reconfiguration of the axle.

Therefore, the need is felt to provide a hybrid axle design whereby one or more electric motors are coupled to a drive axle of a vehicle that are simple and cost-effective.

US7191859B2 and DE202005019438U1 disclose different examples of hybrid architecture for a compact layout.

An aim of the present invention is to satisfy the above mentioned needs in an optimized and cost-effective way.

### SUMMARY OF THE INVENTION

The aforementioned aim is reached by a hybrid driving front axle arrangement and a vehicle as claimed in the appended independent claims.

Preferred embodiments of the invention are realized according to the claims dependent on or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective exploded view of an agricultural vehicle provided with a hybrid driving front axle according to the invention;
- Figure 2 is a perspective exploded view of the hybrid front driving axle according to the invention;

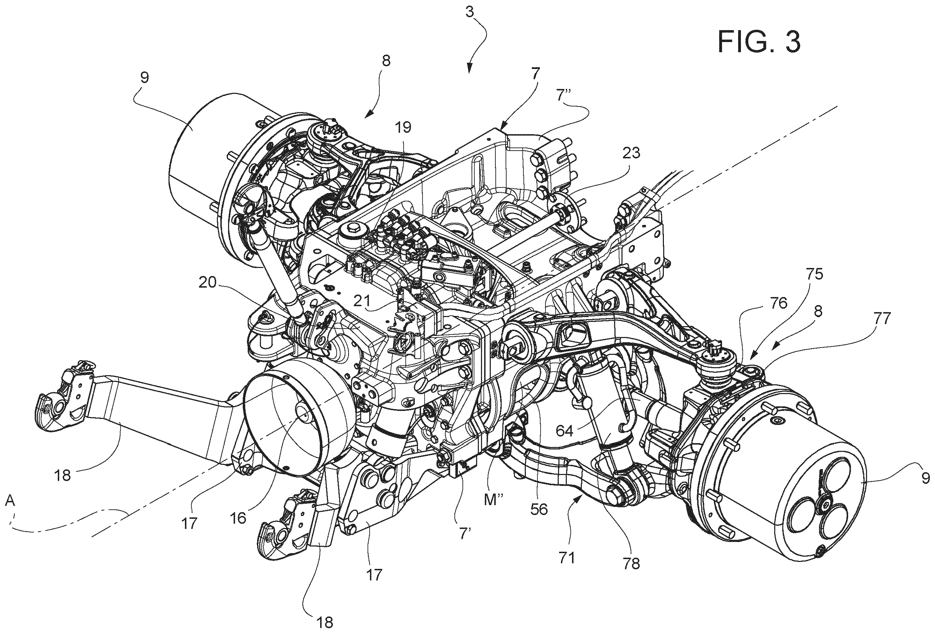

- Figure 3 is a perspective view of the hybrid front driving axle according to the invention;
- Figure 4 is a rear perspective exploded view of part of the hybrid driving front axle according to the invention with parts removed for sake of clarity;
- Figure 5 is a sectional longitudinal view of a portion of the hybrid front driving axle; and
- Figure 6 is schematic representation of the mechanical transmission realized within the hybrid driving front axle according to the invention.

### DETAILED DESCRIPTION OF THE INVENTION

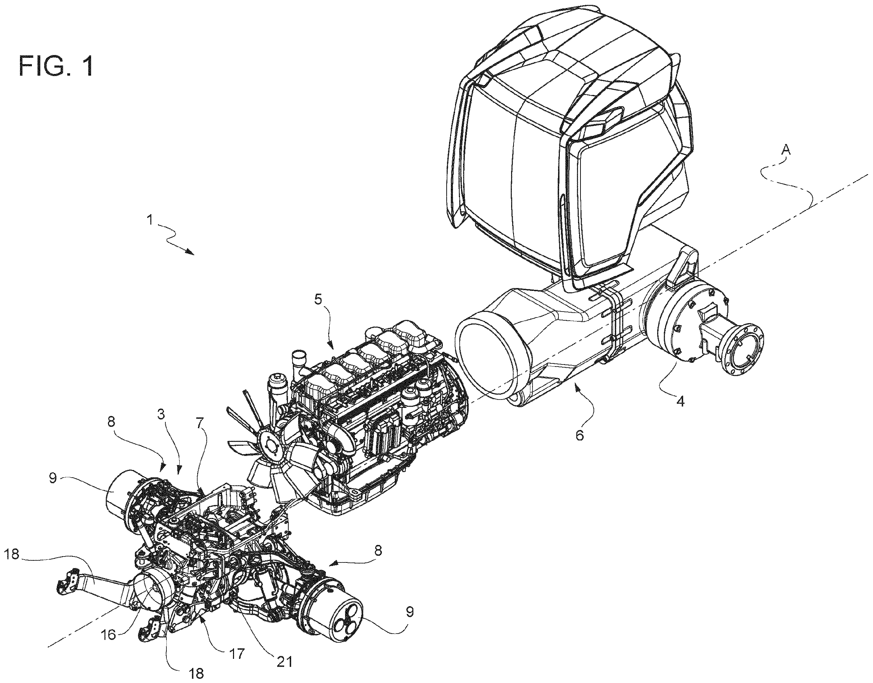

Figure 1 discloses a work vehicle 1 such as a tractor provided with a front axle 3 and a rear axle 4 that are movable with respect to the ground thanks, e.g. to wheels, not shown.

The vehicle 1 is provided with an internal combustion engine 5 and a rear transmission module 6 that is operatively interposed between the internal combustion engine 5 and the rear axle 4.

According to the invention, the front axle 3 is a hybrid driving axle, as described in the following, that is operatively connected to a plurality of electric machines M', M", to the internal combustion engine 5 and to rear transmission module 6.

In particular, electric machines M', M" are electrically connected one with the other in order to allow electrical energy transfer between them. The tractor 1 further comprise electrical energy storage means (not shown) and an electric control unit (not shown) electrically connected to electric machines M', M" to control their operation.

Referring to the accompanying figures, the hybrid axle 3 comprises a housing 7 that is configured to be fixed to the housing of internal combustion engine 5 to house the electric machines M', M" and to house a mechanical transmission as defined in the following. Furthermore, the housing 7 is configured to be connected to hub wheels 9, preferably via suspension systems 8.

The housing 7 essentially comprises a front portion 7' and a rear portion 7" configured to be assembled together via fixation means such as threaded elements.

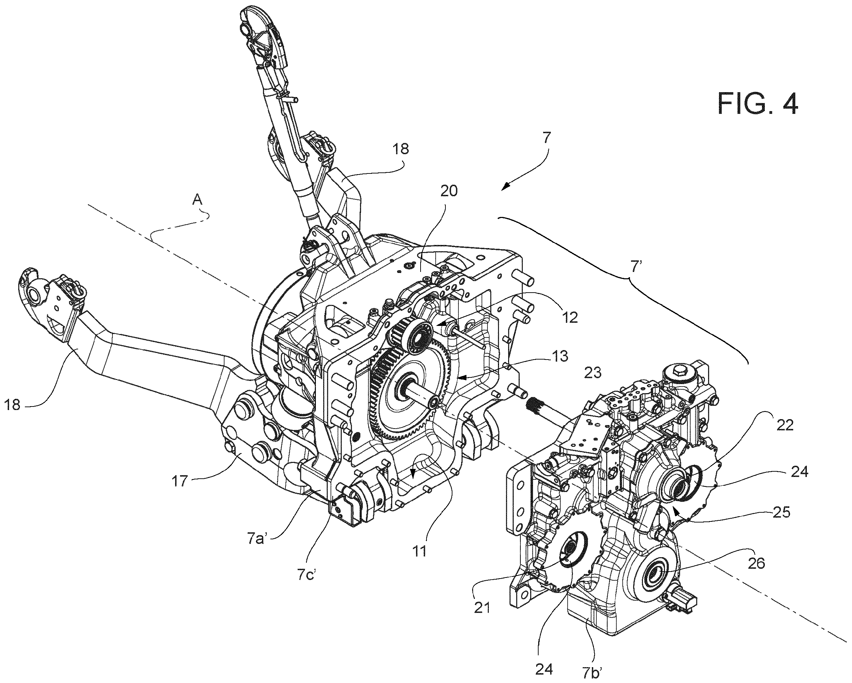

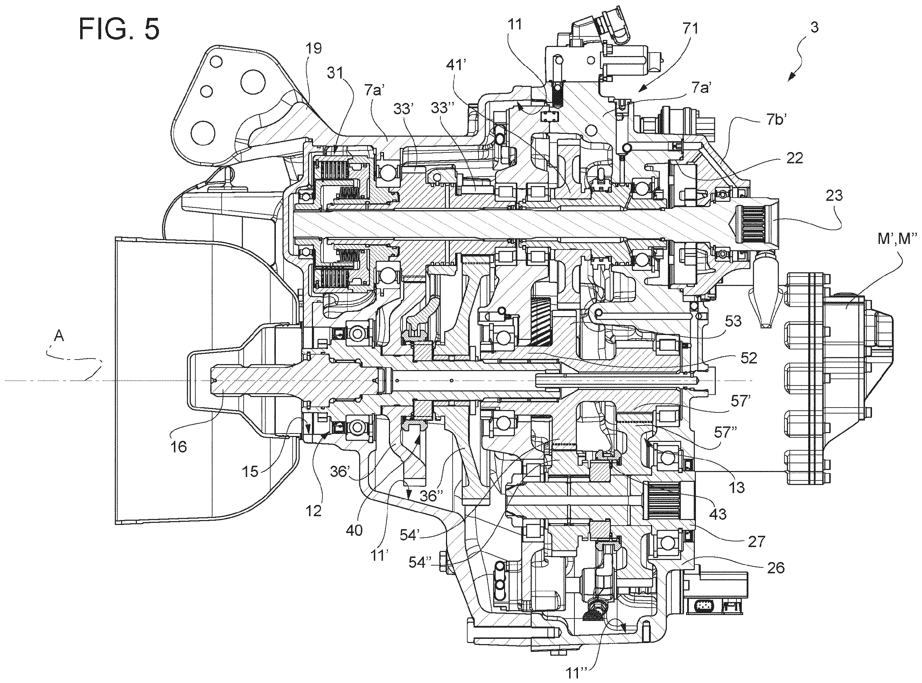

In particular, making reference to figures 4 and 5, the front portion 7' is configured to define a space 11 suitable for housing a power take off, PTO, transmission 12 and an electric path transmission 13 and to define a plurality of fixation points for fixing different operational elements of the vehicle 1 as defined below.

In greater detail, the front portion 7' comprises a front terminal portion 7a' and a rear terminal portion 7b' configured to be assembled together via fixation means, such as traded elements, to define the space 11 housings transmissions 12, 13.

Preferably, the front terminal portion 7a' and a rear terminal portion 7b' comprises an intermediate plate 7c' that is axially comprises along a longitudinal axis A of the vehicle 1 between the front and rear terminal portions 7a', 7b' .

The intermediate plate 7c' divide the space 11 into a front portion 11' voted to house main part of the PTO transmission 12 and a rear portion 11" voted to house main part of the electric path transmission 13.

It is furthermore notice that the PTO transmission 12 and the electric path transmission 13 are independent one with respect to the other from an operational point of view.

The front terminal portion 7a' is designed to define at least one among the following features:
- An opening 15 to allow the passage of a PTO shaft 16;
- At least a pair of fixation points 17 for fixing a front hitch system 18, also known as Front Hitch Power Lift; and/or
- At least a fixation point 19 for fixing high voltage connectors 21such as AEF (agricultural electric foundation) connectors for connecting electric-managed implements.

Furthermore, the front terminal portion 7a' is designed to allow the fixation of a hydraulic actuation assembly 20 configured to control other operational elements of the vehicle.

It can be appreciated that the opening 15 is placed in a front wall and center with respect to the hitch system 18 that comprises preferably at least a pair of lower arms and an upper arm.

The fixation points 19 are preferably realized in an upper wall of the front terminal portion 7a'.

The rear terminal portion 7b' is designed to define:
- An opening 22 to allow the passage of an engine shaft 23;
- At least a pair of seats 24 each provided with an opening 25 each configured to house at least one electric machine M', M";
- An opening 26 configured to allow the passage of a connection shaft 27 that is operatively connected to one of said electric machines M', M" as described in the following.

As best shown in figure 4, the openings 22, 26 are substantially collinear to a vertical axis crossing the longitudinal axis A, while the pair of seats 24 are placed on opposite sides with respect to the longitudinal axis A, preferably equally distance with respect to this latter. The seats 24 are furthermore placed in a vertical intermediate position with respect to openings 22, 26.

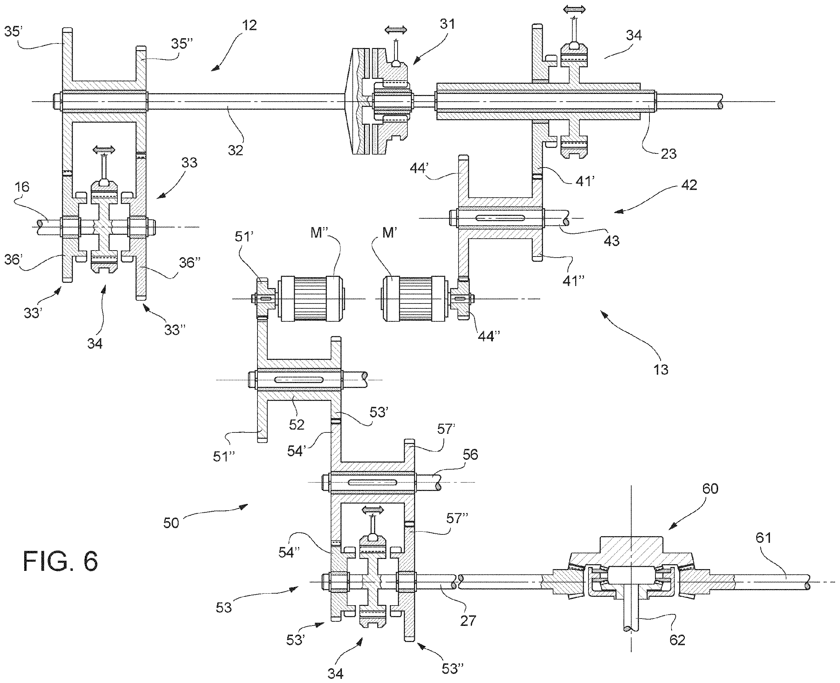

Figure 6 discloses a schematic representation of the gearings comprised by driving front axle 3 and operatively interposed between the engine shaft 23, the PTO shaft 16 and the connection shaft 27.

As said, the gearings comprises two different transmissions, the PTO transmission 12 and the electric path transmission 13.

The PTO transmission 12 comprises coupling means 31 such as a clutch operatively interposed between the engine shaft 23 and a first intermediate shaft 32. The PTO transmission 12 further comprises a reduction stage 33 operatively interposed between the first intermediate shaft 32 and the output shaft 16; in particular, the reduction stage 33 may comprise two different reduction stages 33', 33" and selector means 34 configured to select alternatively the reduction stages 33', 33'' . Such reduction stages 33', 33" being configured to vary the torque/speed provided by the engine shaft 23 with two different gear ratios.

In particular, the first reduction stage 33' comprises a first wheel 35' carried, preferably fixedly carried by shaft 32 and a second wheel 35'' preferably carried in a rotatably free manner by PTO shaft 16, while the second reduction stage 33" comprises a first wheel 36' carried, preferably fixedly carried by shaft 32 and a second wheel 36'' preferably carried in a rotatably free manner by PTO shaft 16.

The electric path transmission 13 preferably comprises a first wheel 41' preferably carried in a movable manner by engine shaft 23 and configured to be selectively fixed to this latter by selection means 34. Such first wheel 41' is configured to be connected to an operative shaft of the first electric machine M, acting as generator, in particular thanks to a reduction stage 42.

The reduction stage 42 preferably comprises a second shaft 43 provided with a first wheel 41'' configured to mesh with the first wheel 41' and a second wheel 44'. Both the first and second wheels 41" and 44' are preferably carried in a fixed manner by second shaft 43. The second wheel 44' is configured to mesh with a third wheel 44'' carried by the operative shaft of the electric machine M.

The electric path transmission 13 further comprises a reduction stage 50 operatively interposed between the second electric machine M', acting as motor, and the connection shaft 27.

In particular, the reduction module 50 preferably comprises a third shaft 52 that is operatively interposed between the second electric machine M' and the connection shaft 27 and a first wheel 51' carried by the operative shaft of the second electric machine M' and a second wheel 51'' carried by the third shaft 52, preferably in a fixedly manner.

The reduction module 50 further comprises a third wheel 53' that is operatively connected to the connection shaft 27 preferably via a reduction stage 53, in particular the reduction stage 53 may comprise two reduction stages 53', 53" and selector means 34 configured to select alternatively the reduction stages 53', 53'' . Such reduction stages 53', 53'' being configured to vary the torque/speed provided by the gear 51 with two different gear ratios.

In particular, the first reduction stage 53' comprises a first wheel 54' carried, preferably fixedly carried by a first shaft 56 and a second wheel 54'' preferably carried in a rotatably free manner by connection shaft 27, while the second reduction stage 53" comprises a first wheel 57' carried, preferably fixedly carried by third shaft 56 and a second wheel 57'' preferably carried in a rotatably free manner by connection shaft 27.

The connection shaft 27 is then configured to mesh into a gearing device 60 that is operatively interposed between the connection shaft 27 and a rear transmission shaft 61 coming from the rear transmission module 4. The gearing device 60 is configured to provide an output shaft 62 to provide torque to hub wheels 9.

The above selector means 34 are schematized as dog clutches but may comprise any suitable selection means actuated in a mechanic, pneumatic or hydraulic way.

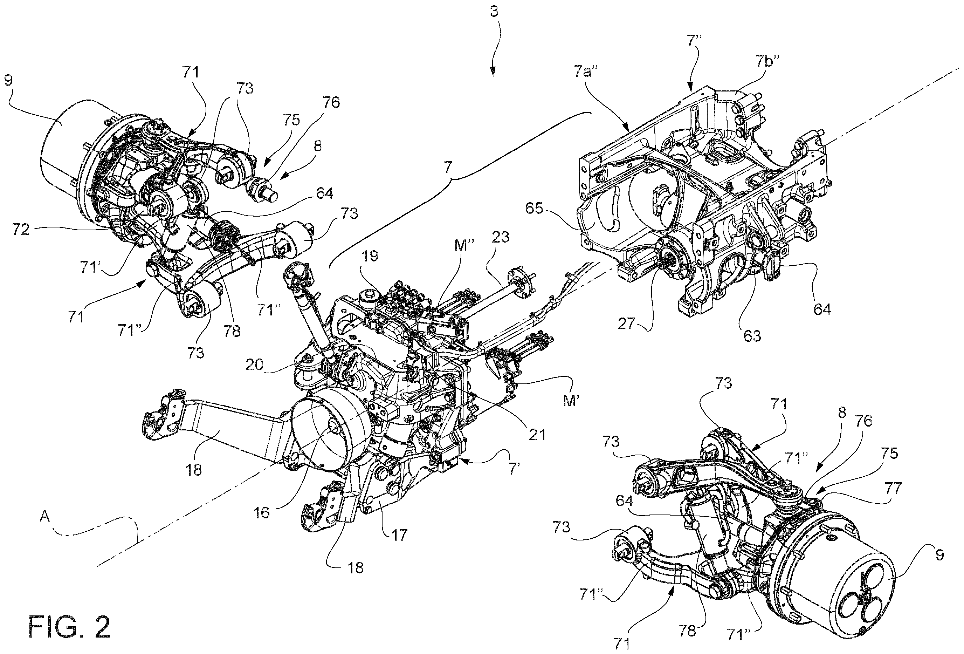

Coming back to the rear portion 7'', as shown in figure 2, it comprises a front terminal portion 7a'' and a rear terminal portion 7b'' that are preferably realized as one piece.

The rear terminal portion 7b" defines a closed space (not shown) configured to house gearing device 60 and openings 63 configured to allow the passage of output driving shafts 64 configured to be connected to the respective wheel hubs 9 to provide torque to these latter.

The front terminal portion 7a' ' defines an open space 65 configured to house a portion of the electric machines M', M". Accordingly, the space 65 is preferably laterally defined by curved walls that follows the profile of the electric machines M', M".

The space 65 is furthermore configured to house the connection shaft 27 that pass within the rear terminal portion 7b''.

Referring back to suspension systems 8, the rear terminal portion 7" defines connection points for fixing the different elements comprised by the suspension systems 8.

In particular, the suspension systems 8 according to the shown embodiment comprise a lower and an upper connection elements 71 shaped as a fork, i.e. "Y"-shaped comprising an outer portion 71' connected to the wheel hub and a pair of inner portions 71'' extending longitudinally spaced along axis A with respect to outer portion 71'.

In the described embodiment, the inner portions 71'' are in particular curved defining a concave portion towards the housing 7; furthermore, preferably both the inner and outer portions 71'', 71' have a curved shape defining a convex edge towards ground.

The outer portion 71' is connected via a hinge 72 to the wheel hub to allow a rotation of this latter about a vertical axis and the inner portions 71" are connected via a respective hinge 73 to the rear portion 7''. Hinges 73 are configured to allow rotation about an axis parallel to longitudinal axis A.

The shape of the connection element 71 allows the passage of the driving shaft 64 above this latter between the rear portion 7" and the hub wheels.

The front axle assembly 3 further advantageously comprises steering means 75 interposed between the hub wheel 9 and the rear portion 7" and configured to control steering angle of the respective hub wheel 9.

The steering system 75 according to the present embodiment comprises a steering arm 76 hinged via a hinge 77 to the wheel hub 9 in a position distanced by the rotation axis of hinge 72. Therefore, movement of steering arm 76 cause a rotation of wheel hub 9 about rotation axis of hinge 72.

The suspension system 8 ma further comprise a dampening element 78 such as a hydraulic cylinder operatively interposed between the housing 7 and the lower connection element 71 and configured to dampen vertical motion of this latter.

Clearly, the hybrid driving front axle 3 further comprises other mechanical elements such as bearings, shoulders, O-rings and other known mechanical elements used for mounting the above mentioned elements and here not described for sake of brevity.

The operation of the hybrid driving front axle 3 according to the invention described above is the following.

Generally, the internal combustion engine 5 carries in rotation the shaft 23 and, on the opposite side and as known, the transmission 4 that provides torque to the rear axle assembly 4 according to the ratio necessity of the vehicle.

On the opposite side when the selector means 34 couple together shafts 23 and 43 the torque passes via gearings 41', 41", 44', 44" to the first electric machine M'. This latter may therefore work as generator, i.e. receiving mechanical energy and providing electrical energy.

In particular, such electrical energy may be used by the second electric machine M" (or stored for further use) that provides torque to gear 51'. The torque passes via gearing between gears 51', 51'' and one between the redactor modules 53', 53'' to connection shaft 27. There, the torque passes through the gearing device 60 to the wheel hubs 9 via driving shaft 64 providing a front driving wheel configuration.

If no torque is provided by rear transmission shaft 61, then the hubs 9 will be carried only by torque provided by electric machine M'', conversely, a four driving wheel configuration will be provided.

Clearly, if the selector means 34 does not engage engine shaft 23 to the electric path assembly 13, this portion will not carried by thermal engine 2 and, in case, torque provided by rear transmission shaft 61 will pass to hubs 9 providing a standard rear driving wheel configuration.

In case, if one of selection means 34 engage one of reduction stages 53', 53'' to the connection shaft 27 when it is carried by the rear transmission shaft 61, the torque will pass towards gear 51' thereby allowing electric machine M" to act as a generator.

If the PTO transmission 12 is present, then, the PTO shaft 16 operation can be modulated by coupling means 31 that engage shaft 32 with the engine shaft 23. In this way torque will pass from engine shaft 23 towards shaft 32 and then via reduction stages 33', 33'' to PTO shaft 16.

In all the aforementioned operations reduction stages 53', 53", 33', 33" can be selected via selection means 34 by the user to provide a suitable output speed of the chosen functionality.

In view of the foregoing, the advantages of the front hybrid driving axle according to the invention and vehicle comprising this latter are apparent.

The provided front hybrid driving axle has a very compact and small dimension, thereby allowing the use in substitution of existing standard axles.

Moreover, the proposed housing allows to provide possible fixation points for many different elements of the tractor 1 in a compact and optimized way. Accordingly, the same housing 7 may be used for many different combination of element configuration that may be provided to the user.

Therefore, manufacturing costs are reduced and versatility of the proposed front hybrid driving axle is increased.

Furthermore, electrical elements are housed within a dedicated space in the housing of the front hybrid driving axle thereby protecting this latter from the vehicle environment. Such latter solution is clearly more simple and safe.

In a very small space the front hybrid driving axle comprises the gearings of the PTO and of the electric path. Furthermore, such gearings are provided in a closed and lubricated space that increases their useful life.

It is clear, furthermore, that it is possible to have an independent traction on the front axle with respect to the rear axle or, alternatively, a four driving wheel traction or, further, a standard rear traction, according to the need of the agricultural vehicle.

As demonstrated, according to the capacity of the battery provided in the vehicle, it is possible to move the agricultural vehicle 1 in a full electric configuration.

It is clear that modifications can be made to the described front hybrid driving axle according to the invention and vehicle comprising this latter which do not extend beyond the scope of protection defined by the claims.

For instance, the disclosed geometries and dimension are variable according to the typology of agricultural vehicle.

Moreover the disclosed gears and gearings may vary according to the necessity of the work vehicle, in particular gear wheels may be of any typology and vary in number. Similarly shaft may be disposed in a different way and vary in their number.

Clearly, it is possible to foresee more than two electric machines and their relative position may vary with respect to the transmission group elements.

Moreover, the actuators shown in the present disclosure may be of any typology other than electro-mechanical, e.g. hydraulic or pneumatic.

## Claims

1. Front hybrid driving axle (3) for an agricultural vehicle (1), said front hybrid driving axle (3) comprising:
a housing (7) configured to be fixed to an internal combustion engine (5) of said agricultural vehicle (1);
at least one electric machine (M', M") carried by said housing (7);
wherein said housing (7) comprises a front portion (7') and a rear portion (7") configured to be connected together along a longitudinal axis (A) of said vehicle (1),
said front portion (7') defining a closed space (11) for housing at least one transmission (12, 13) each comprising a plurality of gears and shafts housed within said closed space (11), said at least one transmission (12, 13) configured for operatively connecting said at least one electric machine (M', M") and an engine shaft (23) of said internal combustion engine (5);
said front hybrid driving axle (3) is **characterized in that** said front portion (7') is configured to carry said at least one electric machine (M', M") outside said closed space (11) and
said rear portion (7") is defining a space (65) for housing said at least one electric machine (M', M") and connection points for fixing respective wheel hubs (9) of said vehicle (1) .

2. Front hybrid driving axle according to claim 1, wherein said front portion (7') comprises at least one among the following:
• An opening (15) to allow the passage of a power take off shaft (16);
• At least one pair of fixation points (17) for fixing a front hitch system (18); and/or
• At least one fixation point (19) for fixing high voltage connectors (21).

3. Front hybrid driving axle according to claim 2, wherein said front portion (7') is configured to allow the fixation of a hydraulic actuation assembly (20) configured to control other operational element of the vehicle.

4. Front hybrid driving axle according to claim 2 or 3, wherein said opening (15) is placed in a front wall of said front portion (7').

5. Front hybrid driving axle according to any of claims 2 to 4, wherein said at least one fixation point (19) is realized in an upper wall of said front portion (7').

6. Front hybrid driving axle according to any of the preceding claims, wherein said front portion (7') comprises a front terminal portion (7a) and a rear terminal portion (7b), said rear terminal portion (7b) being configured to provide:
• An opening (22) to allow the passage of said engine shaft (23);
• At least one seat (24) each provided with an opening (24) configured to house said least one electric machine (M', M); and
• An opening (25) configured to allow the passage of a connection shaft (27) that is operatively connected to one of said at least one electric machine (M', M").

7. Front hybrid driving axle according to claim 6, wherein said rear portion (7") defines an opening (63) for allowing the passage of driving shafts (64) of said wheel hubs (64), an opening for allowing the passage of said connection shaft (27) and a closed space for housing a gearing device (60), said gearing device (60) being configured to operatively connect said driving shafts (64), said connection shaft (27) and a rear transmission shaft (62) of said vehicle (1).

8. Front hybrid driving axle according to claim 7, wherein said rear terminal portion (7b') is faced to said space (65).

9. Front hybrid driving axle according to claim 2 or any of preceding claims 3-8, as far as the latter depend on claim 2, comprising a power take off transmission (12) housed within said space (11) and operatively interposed between said internal combustion engine (5) and the power take off shaft (16).

10. Front hybrid driving axle according to any of said preceding claims, comprising an electric path transmission (13) housed within said space (11) and operatively interposed between said internal combustion engine (5) said wheel hubs (9).

11. Front hybrid axle according to claims 9 and 10, wherein said power take off transmission (12) is independent with respect to said electric path transmission (13).

12. Front hybrid axle according to any of claims 9 to 11, wherein said at least one transmission (12, 13) comprises coupling means (31, 34) for disconnecting said at least one transmission (12, 13) from said engine shaft (23).

13. Front hybrid axle according to any of claims 9 to 12, wherein said at least one transmission (12, 13) comprises at least two reduction stages (33', 33", 53', 53'') and coupling means (34) for selecting one between said two reduction stages (33', 33", 53', 53"), said reduction stages (33', 33" , 53', 53") being configured to vary the torque/speed between the respective input and output shafts and having different gear ratios one with respect to the other.

14. Front hybrid axle according to any of claims 9 to 12, wherein said wheel hub (9) are connected to said rear portion (7") via a respective suspension system (8).

15. Front hybrid axle according to claim 14, wherein said suspension system comprises an upper and a lower connection elements (71) extending below and above the driving shaft (64) of said wheel hub (9) and having a Y-shape comprising a first portion (71') and a pair of second portions (71") extending from such first portion (71'), the first portion (71') being hinged to said hub wheel (9) to allow rotation about a vertical axis of said hub wheel (9), the second portions (71") being hinged to said rear portion (7") to allow rotation about an axis parallel to said longitudinal axis (A).

16. Front hybrid axle according to claim 14, wherein said connection element (71) has a convex shape with respect to the ground.

17. Front hybrid axle according to any of claims 14 to 16, further comprising a steering system (75) for said hub wheel (9), said steering system being interposed between said hub wheel (9) and said rear portion (7").

18. Agricultural vehicle (1) comprising an internal combustion engine (5), a rear transmission (6) carried by such internal combustion engine (5), a rear transmission axle (4) operatively connected to said internal combustion engine (5) and a front hybrid driving axle (3) as claimed in any of the preceding claims operatively connected to said internal combustion engine (5) and said rear transmission (6) .

## Patentansprüche

1. Hybrid-Fahrvorderachse (3) für ein landwirtschaftliches Fahrzeug (1), wobei die Hybrid-Fahrvorderachse (3) aufweist:
ein Gehäuse (7), das dazu eingerichtet ist, an einem Verbrennungsmotor (5) des landwirtschaftlichen Fahrzeugs (1) befestigt zu sein;
mindestens eine elektrische Maschine (M', M"), die von dem Gehäuse (7) getragen ist;
wobei das Gehäuse (7) einen vorderen Abschnitt (7`) und einen hinteren Abschnitt (7") aufweist, die dazu eingerichtet sind, entlang einer Längsachse (A) des Fahrzeugs (1) miteinander verbunden zu sein,
wobei der vordere Abschnitt (7') einen geschlossenen Raum (11) definiert, um mindestens ein Getriebe (12, 13) aufzunehmen, von denen jedes eine Mehrzahl von Zahnrädern und Wellen umfasst, die in dem geschlossenen Raum (11) aufgenommen sind, wobei das mindestens eine Getriebe (12, 13) dazu eingerichtet ist, die mindestens eine elektrische Maschine (M', M") mit einer Motorwelle (23) des Verbrennungsmotors (5) in Wirkverbindung zu bringen;
wobei die Hybrid-Fahrvorderachse (3) **dadurch gekennzeichnet ist, dass**
der vordere Abschnitt (7`) dazu eingerichtet ist, die mindestens eine elektrische Maschine (M', M") außerhalb des geschlossenen Raums (11) zu tragen, und
der hintere Abschnitt (7") einen Raum (65) zur Aufnahme mindestens einer elektrischen Maschine (M', M") und von Befestigungspunkten zum Befestigen von jeweiligen Radnaben (9) des Fahrzeugs (1) aufweist.

2. Hybrid-Fahrvorderachse nach Anspruch 1, wobei der vordere Abschnitt (7') mindestens eines aus den folgenden Elementen umfasst:
• eine Öffnung (15), um das Hindurchführen einer Zapfwelle (16) zu ermöglichen;
• mindestens ein Paar von Befestigungspunkten (17) zum Befestigen einer vorderen Anhängervorrichtung (18); und/oder
• mindestens einen Befestigungspunkt (19) zum Befestigen von Hochspannungs-Anschlüssen (21).

3. Hybrid-Fahrvorderachse nach Anspruch 2, wobei der vordere Abschnitt (7`) dazu eingerichtet ist, die Befestigung einer hydraulischen Betätigungsvorrichtung (20) zu ermöglichen, die dazu eingerichtet ist, ein weiteres Betriebselement des Fahrzeugs zu steuern.

4. Hybrid-Fahrvorderachse nach Anspruch 2 oder 3, wobei die Öffnung (15) in einer vorderen Wand des vorderen Abschnitts (7`) vorgesehen ist.

5. Hybrid-Fahrvorderachse nach einem der Ansprüche 2 bis 4, wobei der mindestens eine Befestigungspunkt (19) in einer oberen Wand des vorderen Abschnitts (7`) verwirklicht ist.

6. Hybrid-Fahrvorderachse nach einem der vorhergehenden Ansprüche, wobei der vordere Abschnitt (7`) einen vorderen Anschlussabschnitt (7a) und einen hinteren Anschlussabschnitt (7b) aufweist, wobei der hintere Anschlussabschnitt (7b) dazu eingerichtet ist, um Folgendes bereitzustellen:
• eine Öffnung (22), um das Hindurchführen der Motorwelle (23) zu ermöglichen;
• mindestens einen Sitz (24), der jeweils mit einer Öffnung (24) versehen ist, die dazu eingerichtet ist, die mindestens eine elektrische Maschine (M', M") aufzunehmen; und
• eine Öffnung (25), die dazu eingerichtet ist, das Hindurchführen einer Verbindungswelle (27) zu ermöglichen, die mit einer aus der mindestens einen elektrischen Maschine (M', M") in Wirkverbindung steht.

7. Hybrid-Fahrvorderachse nach Anspruch 6, wobei der hintere Abschnitt (7") eine Öffnung (63), um das Hindurchführen von Antriebswellen (64) der Radnaben (64) zu ermöglichen, eine Öffnung, um das Hindurchführen der Verbindungswelle (27) zu ermöglichen, und einen geschlossenen Raum zur Aufnahme einer Getriebevorrichtung (60) aufweist, wobei die Getriebevorrichtung (60) dazu eingerichtet ist, die Antriebswellen (64), die Verbindungswelle (27) und eine hintere Übertragungswelle (62) des Fahrzeugs (1) in Wirkverbindung zu bringen.

8. Hybrid-Fahrvorderachse nach Anspruch 7, wobei der hintere Anschlussabschnitt (7b') dem Raum (65) zugewandt ist.

9. Hybrid-Fahrvorderachse nach Anspruch 2 oder nach einem der vorhergehenden Ansprüche 3 bis 8, sofern letztere von Anspruch 2 abhängig sind, die ein Zapfwellengetriebe (12) aufweist, die in dem Raum (11) aufgenommen ist und zwischen dem Verbrennungsmotor (5) und der Zapfwelle (16) in Wirkverbindung steht.

10. Hybrid-Fahrvorderachse nach einem der vorhergehenden Ansprüche, die einen elektrischen Übertragungspfad (13) aufweist, der in dem Raum (11) aufgenommen ist und der wirksam zwischen dem Verbrennungsmotor (5) und den Radnaben (9) angeordnet ist.

11. Hybrid-Fahrvorderachse nach den Ansprüchen 9 und 10, wobei das Zapfwellengetriebe (12) unabhängig von dem elektrischen Übertragungspfad (13) ist.

12. Hybrid-Fahrvorderachse nach einem der Ansprüche 9 bis 11, wobei das mindestens eine Getriebe (12, 13) Kupplungseinrichtungen (31, 34) zum Trennen des mindestens einen Getriebes (12, 13) von der Motorwelle (23) aufweist.

13. Hybrid-Fahrvorderachse nach einem der Ansprüche 9 bis 12, wobei das mindestens eine Getriebe (12, 13) mindestens zwei Untersetzungsstufen (33', 33", 53', 53") und Kupplungseinrichtungen (34) zum Auswählen einer zwischen den beiden Untersetzungsstufen (33`, 33", 53', 53") aufweist, wobei die Untersetzungsstufen (33`, 33", 53', 53") dazu eingerichtet sind, das Drehmoment/Geschwindigkeit zwischen den jeweiligen Eingangs- und Ausgangswellen zu verändern, und im Verhältnis zueinander verschiedene Übersetzungsverhältnisse haben.

14. Hybrid-Fahrvorderachse nach einem der Ansprüche 9 bis 12, wobei die Radnaben (9) mit dem hinteren Abschnitt (7") über ein entsprechendes Aufhängungssystem (8) verbunden sind.

15. Hybrid-Fahrvorderachse nach Anspruch 14, wobei das Aufhängungssystem ein oberes und ein unteres Verbindungselement (71) umfasst, die sich unterhalb und oberhalb der Antriebswelle (64) der Radnabe (9) erstrecken und die eine Y-Form mit einem ersten Abschnitt (71') und einem Paar von zweiten Abschnitten (71"), die sich von dem ersten Abschnitt (71') erstrecken, aufweisen, wobei der erste Abschnitt (71') mit der Radnabe (9) schwenkverbunden ist, um eine Drehung um eine vertikale Achse der Radnabe (9) zu ermöglichen, wobei die zweiten Abschnitte (71") mit dem hinteren Abschnitt (7") schwenkverbunden sind, um eine Drehung um eine Achse parallel zur Längsachse (A) zu ermöglichen.

16. Hybrid-Fahrvorderachse nach Anspruch 14, wobei das Verbindungselement (71) eine konvexe Form bezüglich des Bodens hat.

17. Hybrid-Fahrvorderachse nach einem der Ansprüche 14 bis 16, die des Weiteren ein Steuerungssystem (75) für die Radnabe (9) aufweist, wobei das Steuerungssystem zwischen der Radnabe (9) und dem hinteren Abschnitt (7") angeordnet ist.

18. Landwirtschaftliches Fahrzeug (1) mit einem Verbrennungsmotor (5), einem hinteren Getriebe (6), das von dem Verbrennungsmotor (5) getragen wird, einer hinteren Getriebeachse (4), die mit dem Verbrennungsmotor (5) in Wirkverbindung steht, und einer Hybrid-Fahrvorderachse (3) nach einem der vorhergehenden Ansprüche, die mit dem Verbrennungsmotor (5) und dem hinteren Getriebe (6) in Wirkverbindung steht.

## Revendications

1. Essieu moteur hybride avant (3) pour un véhicule agricole (1), ledit essieu moteur hybride avant (3) comprenant :
un boîtier (7) configuré pour être fixé à un moteur à combustion interne (5) dudit véhicule agricole (1) ;
au moins une machine électrique (M', M") soutenue par ledit boîtier (7) ;
dans lequel ledit boîtier (7) comprend une partie avant (7') et une partie arrière (7") configurées pour être raccordées ensemble le long d'un axe longitudinal (A) dudit véhicule (1),
ladite partie avant (7') définissant un espace fermé (11) pour loger au moins une transmission (12, 13) comprenant chacune une pluralité d'engrenages et d'arbres logés dans ledit espace fermé (11), ladite au moins une transmission (12, 13) est configurée pour raccorder de manière fonctionnelle ladite au moins une machine électrique (M', M") et un arbre moteur (23) dudit moteur à combustion interne (5) ;
ledit essieu moteur hybride avant (3) est **caractérisé en ce que**
ladite partie avant (7') est configurée pour soutenir ladite au moins une machine électrique (M', M") à l'extérieur dudit espace fermé (11) et
ladite partie arrière (7") définit un espace (65) pour loger ladite au moins une machine électrique (M', M") et des points de raccordement pour fixer des moyeux de roue respectifs (9) dudit véhicule (1).

2. Essieu moteur hybride avant selon la revendication 1, dans lequel ladite partie avant (7') comprend au moins l'un parmi les suivants :
• une ouverture (15) pour permettre le passage d'un arbre de prise de force (16) ;
• au moins une paire de points de fixation (17) pour fixer un système d'attelage avant (18) ; et/ou
• au moins un point de fixation (19) pour fixer des connecteurs haute tension (21).

3. Essieu moteur hybride avant selon la revendication 2, dans lequel ladite partie avant (7') est configurée pour permettre la fixation d'un ensemble d'actionnement hydraulique (20) configuré pour commander un autre élément fonctionnel du véhicule.

4. Essieu moteur hybride avant selon la revendication 2 ou la revendication 3, dans lequel ladite ouverture (15) est placée dans une paroi avant de ladite partie avant (7').

5. Essieu moteur hybride avant selon l'une quelconque des revendications 2 à 4, dans lequel ledit au moins un point de fixation (19) est réalisé dans une paroi supérieure de ladite partie avant (7').

6. Essieu moteur hybride avant selon l'une quelconque des revendications précédentes, dans lequel ladite partie avant (7') comprend une partie terminale avant (7a) et une partie terminale arrière (7b), ladite partie terminale arrière (7b) étant configurée pour fournir :
• une ouverture (22) pour permettre le passage dudit arbre moteur (23) ;
• au moins un siège (24) pourvu chacun d'une ouverture (24) configurée pour loger ladite au moins une machine électrique (M', M) ; et
• une ouverture (25) configurée pour permettre le passage d'un arbre de raccordement (27) qui est raccordé fonctionnellement à l'une desdites au moins une machine électrique (M', M").

7. Essieu moteur hybride avant selon la revendication 6, dans lequel ladite partie arrière (7") définit une ouverture (63) pour permettre le passage d'arbres d'entraînement (64) desdits moyeux de roue (64), une ouverture destinée à permettre le passage dudit arbre de raccordement (27) et un espace fermé destiné à loger un dispositif d'engrenage (60), ledit dispositif d'engrenage (60) étant configuré pour raccorder fonctionnellement lesdits arbres d'entraînement (64), ledit arbre de raccordement (27) et un arbre de transmission arrière (62) dudit véhicule (1).

8. Essieu moteur hybride avant selon la revendication 7, dans lequel ladite partie terminale arrière (7b') est tournée vers ledit espace (65).

9. Essieu moteur hybride avant selon la revendication 2 ou l'une quelconque des précédentes revendications 3 à 8, dans la mesure où ces dernières dépendent de la revendication 2, comprenant une transmission de prise de force (12) logée dans ledit espace (11) et interposée fonctionnellement entre ledit moteur à combustion interne (5) et l'arbre de prise de force (16).

10. Essieu moteur hybride avant selon l'une quelconque des revendications précédentes, comprenant une transmission par voie électrique (13) logée dans ledit espace (11) et interposée fonctionnellement entre ledit moteur à combustion interne (5) et lesdits moyeux de roue (9).

11. Essieu hybride avant selon la revendication 9 et la revendication 10, dans lequel ladite transmission de prise de force (12) est indépendante par rapport à ladite transmission par voie électrique (13).

12. Essieu hybride avant selon l'une quelconque des revendications 9 à 11, dans lequel ladite au moins une transmission (12, 13) comprend des moyens de couplage (31, 34) pour déconnecter ladite au moins une transmission (12, 13) dudit arbre moteur (23).

13. Essieu hybride avant selon l'une quelconque des revendications 9 à 12, dans lequel ladite au moins une transmission (12, 13) comprend au moins deux étages de réduction (33', 33", 53', 53") et des moyens de couplage (34) pour sélectionner l'un parmi lesdits deux étages de réduction (33', 33", 53', 53"), lesdits étages de réduction (33', 33", 53', 53") étant configurés pour faire varier le couple/la vitesse entre les arbres d'entrée et de sortie respectifs et ayant des rapports d'engrenage différents l'un par rapport à l'autre.

14. Essieu hybride avant selon l'une quelconque des revendications 9 à 12, dans lequel ledit moyeu de roue (9) est raccordé à ladite partie arrière (7") par l'intermédiaire d'un système de suspension respectif (8).

15. Essieu hybride avant selon la revendication 14, dans lequel ledit système de suspension comprend un élément de raccordement supérieur et un élément de raccordement inférieur (71) s'étendant en dessous et au-dessus de l'arbre d'entraînement (64) dudit moyeu de roue (9) et ayant une forme en Y comprenant une première partie (71') et une paire de secondes parties (71") s'étendant à partir de cette première partie (71'), la première partie (71') étant articulée sur ledit moyeu de roue (9) pour permettre une rotation autour d'un axe vertical dudit moyeu de roue (9), les secondes parties (71") étant articulées sur ladite partie arrière (7") pour permettre une rotation autour d'un axe parallèle audit axe longitudinal (A).

16. Essieu hybride avant selon la revendication 14, dans lequel ledit élément de raccordement (71) présente une forme convexe par rapport au sol.

17. Essieu hybride avant selon l'une quelconque des revendications 14 à 16, comprenant en outre un système de direction (75) pour ledit moyeu de roue (9), ledit système de direction étant interposé entre ledit moyeu de roue (9) et ladite partie arrière (7").

18. Véhicule agricole (1) comprenant un moteur à combustion interne (5), une transmission arrière (6) soutenue par ce moteur à combustion interne (5), un essieu de transmission arrière (4) raccordé fonctionnellement audit moteur à combustion interne (5) et un essieu moteur hybride avant (3) selon l'une quelconque des revendications précédentes raccordé fonctionnellement audit moteur à combustion interne (5) et à ladite transmission arrière (6).
